# EUROPEAN PATENT APPLICATION

(11) **EP 4 464 807 A1**
(43) Date of publication of application: **20.11.2024**
(21) Application number: 22920617.2
(22) Date of filing: 23.12.2022
(51) Int. Cl.: C22C 1/10, B22D 18/02, B22D 19/00, B22D 21/04

(54) **METAL-COATED METAL-MATRIX COMPOSITE AND MANUFACTURING METHOD OF METAL-COATED METAL-MATRIX COMPOSITE**

(30) Priority: 14.01.2022 JP 2022004376
(71) Applicant: Advanced Composite Corporation, Fuji-shi, Shizuoka 417-0801 (JP)
(72) Inventor: TAKAGI, Yoshio, Fuji-shi, Shizuoka 417-0801 (JP); KITAMURA, Hitoshi, Fuji-shi, Shizuoka 417-0801 (JP); OCHIAI, Shogo, Fuji-shi, Shizuoka 417-0801 (JP)
(74) Representative: Wächtershäuser & Hartz Patentanwaltspartnerschaft mbB
(86) International application number: PCT/JP2022/047658
(87) International publication number: WO 2023/136100

(57) **Abstract**

An object of the present invention is to develop a technique for providing a novel metal matrix composite capable of stably suppressing problems of conventional composites formed with a reinforcing material and a matrix material, such as a metal, the problems being, for example, inferior mechanical properties such as tensile and bending strengths to those of single-phase materials, such as a metal, coarser surface roughness due to, for example, chipping and wear of a cutting edge caused by fall-off of a reinforcing material or collision of a blade with a hard reinforcing material during precision shaping machining, and inferior workability. There is provided a metal-coated metal matrix composite formed by compounding a matrix material, such as a pure metal, and a reinforcing material, such as ceramic, wherein the reinforcing material is a porous molded body and regular unevenness is provided on the surfaces of the molded body, and thereby the metal-coated metal matrix composite has, on the surfaces thereof, a metal coating layer comprising the unevenness and being continuously integrated with the matrix material forming the composite; and the metal coating layer has a thickness of 0.5 mm to 5 mm, and the unevenness has a height difference of 0.1 mm or more and the height difference is within a range of 50% or less of the thickness of the metal coating layer, and the shape of the unevenness is periodic.

## Description

### Technical Field

The present invention relates to: a metal-coated metal matrix composite that is lightweight and has high reliability, that is obtained by using a metal or an alloy as a matrix and compounding a reinforcing material, which is a material different from the matrix, with the matrix, and that has, on the surfaces thereof, a metal coating layer formed continuously integrated with the matrix present inside; and a method for producing a metal-coated metal matrix composite.

### Background Art

Metal matrix composites (MMCs) containing, for example: a metal, such as aluminum or an aluminum alloy, as a matrix material; and, as a reinforcing material, ceramic particles, or a metal that is different from the matrix, have excellent properties, such as excellent specific strength, specific rigidity, and thermal properties, as compared to the matrix material, and therefore have been utilized in various industrial fields. For example, in automobiles where lightweight properties are required, application of the metal matrix composites to engine parts has been actively developed. Specifically, fiber-reinforced type aluminum matrix composites reinforced by using ceramic fibers and aluminum matrix composites using ceramic particles have been utilized.

However, in recent years, the utilization of fibrous ceramics in production sites has been decreasing due to doubts about the safety of fibrous ceramics to the human body. On the other hand, in an aluminum matrix composite using ceramic particles, a lot of interfaces between the ceramic particles and aluminum serving as a matrix are present, which may cause chipping or cracking. Therefore, it is desired to improve the reliability of the member.

When a metal matrix composite is utilized in the fields of semiconductor production apparatuses and highspeed moving bodies, chipping or cracking is highly likely to cause serious trouble, and therefore measures are taken, wherein surface treatment, such as plating, sputtering, and anodic oxidation coating, is performed. However, in the aluminum matrix composite containing ceramic particles as a reinforcing material, the ceramic particles are exposed on the surfaces, and therefore the adhesion strength to a coating film is weak, and the homogeneity of the coating film may be uneven. Therefore, it can be said that the above-described measures have a small effect on the reinforcement of fracture toughness in a material such as an aluminum matrix composite containing ceramic particles. Here, in a metal matrix composite, it has been proposed to coat the surfaces of a reinforcing material to be used with a metal, and for example, the following proposals have been made.

Patent Literature 1 proposes preparation of a material, wherein molten aluminum is poured into a preformed body (preform) obtained by using alumina fibers to form a composite, the composite portion is then cut to obtain a reinforcing material having a predetermined size, and the surfaces of the reinforcing material (metal matrix composite) are coated with a matrix material and a metal different from the matrix material by pressurization and heat treatment in a separate step for the purpose of use in a vacuum vessel. Patent Literature 2 discloses a metal-carbon composite provided with ceramic-coated carbon particles and a continuous metal layer in which the carbon particles are dispersed, and states that the continuous metal layer has a thickness of 10 nm to 100 µm.

### Citation List

### Patent Literature

Patent Literature 1: Japanese Patent Laid-Open No. H9-174222
Patent Literature 2: Japanese Patent Laid-Open No. 2014-47127

### Summary of Invention

### Technical Problem

According to studies conducted by the present inventors, not only in the above-described conventional techniques but also in conventional metal matrix composites, the outermost surfaces are also formed with a composite phase of a matrix material and a reinforcing material, and therefore a lot of interfaces between the matrix material and the reinforcing material are present, which causes the following technical problems, so that there is room for improvements. Specifically, when the outermost surfaces are composed of a composite phase having a matrix material, the interface portion between the matrix material and the reinforcing material is weaker than in the case of a single phase of a metal, and therefore the interface portion is likely to serve as a starting point of fracture or is likely to promote the growth and progress of fracture. Actually, in metal matrix composites composed of a matrix material and a reinforcing material, there have been problems that: mechanical properties, such as tensile strength and bending strength, are low; and surface roughness becomes rough or processability is inferior due to chipping and abrasion of a cutting edge of a cutting tool caused by falling of the reinforcing material or collision of the cutting tool with the hard reinforcing material at the time of precise shape processing. In addition, the metal matrix composites also have a problem of dust generation caused by falling of a part of the reinforcing material due to sliding, friction, or the like during use, and a problem that the surface treatability in terms of plating, alumite treatment, and the like is poor.

In the above-mentioned conventional techniques, it is possible to coat a reinforcing material with a metal layer, but according to studies conducted by the present inventors, there have been the following problems. In Patent Literature 1, the surfaces of the already produced metal matrix composite are further coated with a metal. However, the method for coating the surfaces with the metal is performed in a pressurizing and heating treatment step performed at a temperature not exceeding the melting point of the metal, and therefore the surfaces of the already produced metal matrix composite and the metal layer to further coat the surfaces are not melt-bonded. For this reason, the formed coating layer has a low adhesiveness and a low bonding strength, and is likely to cause peel-off or lost by falling. Accordingly, this technique cannot solve the above-described technical problems to be solved by the present invention sufficiently with respect to mechanical properties, surface accuracy/roughness and processability in processing, and the like in the metal matrix composites.

In the technique of Patent Literature 2, it is stated that the surfaces of the ceramic-coated carbon particles (reinforcing material) can be substantially coated with the metal particles by adjusting the particle sizes of the metal particles and the carbon particles, but all of the carbon particles dispersed in the metal layer in the metal-carbon composite obtained after calcination cannot be sufficiently coated with the metal layer. In addition, the thickness of the metal layer in this technique is as thin as 10 nm to 100 µm, and besides, the metal-carbon composite is obtained by sintering, and therefore the adhesion strength between particles is low, so that a material having a high strength cannot be obtained. Accordingly, this technique is also not a solution for realizing improvements in the mechanical properties, the surface accuracy/roughness and processability in processing, and the like in the metal matrix composites, which are technical problems to be solved by the present invention.

Accordingly, an object of the present invention is to develop a technique capable of providing a metal matrix composite that is formed by using a pure metal or an alloy (hereinafter, also referred to as a metal or the like) as a matrix material and a material different from the matrix material as a reinforcing material and that solves the following problems which have not been solved by conventional metal matrix composites. Specifically, in conventional metal matrix composites as compared to materials of a single phase of a metal or the like, there have been problems that: mechanical properties, such as tensile strength and bending strength, are low; and surface roughness becomes rough or processability is inferior due to chipping and abrasion of a cutting edge of a cutting tool caused by falling of the reinforcing material or collision of the cutting tool with the hard reinforcing material at the time of precise shape processing, and facing such problems, the object of the present invention is to provide a useful metal matrix composite in which these problems are suppressed stably. Another object of the present invention is to provide the above-described useful metal matrix composite and thereby realize providing a product composed of the metal matrix composite: to which a new function that has not been obtained from a matrix material alone is added by compounding the matrix material with a reinforcing material to form a composite; in which technical problems peculiar to metal matrix composites, caused by forming the composite, are solved; and in which the reliability is enhanced more than the conventional products.

### Solution to Problem

The objects can be achieved by the following metal-coated metal matrix composite of the present invention.
[1] A metal-coated metal matrix composite that is a metal matrix composite being a pressure-cast product, formed: using, as a matrix material, a pure metal or an alloy, including aluminum or an aluminum alloy, magnesium or a magnesium alloy, or copper or a copper alloy; using, as a reinforcing material, a material comprising ceramic particles or metal particles different from the matrix material; and compounding the matrix material and the reinforcing material, wherein the reinforcing material is a porous molded body and regular unevenness is provided on the surfaces of the molded body, and thereby the metal-coated metal matrix composite has, on the surfaces thereof, a continuously integrated metal coating layer including the unevenness and composed of the matrix material forming the composite; and the metal coating layer has a thickness of 0.5 mm to 5 mm, and the unevenness has a height difference of 0.1 mm or more and the height difference is within a range of 50% or less of the thickness of the metal coating layer, and the shape of the unevenness is periodic.
   Preferred embodiments of the metal-coated metal matrix composite of the present invention include the following.
[2] The metal-coated metal matrix composite according to [1], wherein the metal coating layer has a thickness of 2 mm to 3 mm.
[3] The metal-coated metal matrix composite according to [1] or [2], wherein the matrix material is at least any of aluminum, an aluminum alloy, magnesium, a magnesium alloy, copper, and a copper alloy.
[4] The metal-coated metal matrix composite according to any one of [1] to [3], wherein the ceramic particles are at least any of silicon carbide particles, aluminum borate particles, and alumina particles, and the metal particles are at least Si particles or Al₃Ni particles.
   In addition, the present invention provides a method for producing a metal-coated metal matrix composite, described below, as another embodiment.
[5] A method for producing a metal-coated metal matrix composite, the method being a method for obtaining a metal-coated metal matrix composite being a pressure-cast product by compounding a matrix material that is a pure metal or an alloy, including aluminum or an aluminum alloy, magnesium or a magnesium alloy, or copper or a copper alloy, and a reinforcing material being a material different from the matrix material and comprising ceramic particles or metal particles, wherein the method comprises a composite forming step of setting the reinforcing material being a porous molded body in a metal mold, impregnating and filling the pores of the porous molded body with the molten matrix material by a pressure casting method to compound the reinforcing material and the matrix material to obtain a metal matrix composite; in the composite forming step, a porous molded body having regular unevenness provided on the surfaces thereof is used as the porous molded body, and thereby a continuously integrated metal coating layer including the unevenness, composed of the matrix material, and having a thickness of 0.5 mm to 5 mm is simultaneously formed on the surfaces of the metal matrix composite obtained by impregnating and filling the pores with the matrix material by the pressure casting method; and the unevenness has a height difference of 0.1 mm or more and the height difference is within a range of 50% or less of the thickness of the metal coating layer, and the shape of the unevenness is periodic.
   Preferred embodiments of the method for producing a metal-coated metal matrix composite of the present invention include the following.
[6] The method for producing a metal-coated metal matrix composite according to [5], wherein the metal coating layer has a thickness of 2 mm to 3 mm.
[7] The method for producing a metal-coated metal matrix composite according to [5] or [6], wherein the matrix material is at least any of aluminum, an aluminum alloy, magnesium, a magnesium alloy, copper, and a copper alloy.
[8] The method for producing a metal-coated metal matrix composite according to any one of [5] to [7], wherein the ceramic particles are at least any of silicon carbide particles, aluminum borate particles, and alumina particles, and the metal particles are Si particles or Al₃Ni particles.
[9] The method for producing a metal-coated metal matrix composite according to any one of [5] to [8], wherein the pressure casting method is any one selected from the group consisting of a high-pressure casting method, a squeeze casting method, and die casting.
[10] The method for producing a metal-coated metal matrix composite according to any one of [5] to [8], wherein the pressure casting method is a high-pressure casting method.

### Advantageous Effects of Invention

In conventional metal matrix composites formed using a metal or the like as a matrix material and using, as a reinforcing material, a material different from the matrix material, as compared to materials of a single phase of a metal or the like, there have been problems that: mechanical properties, such as tensile strength and bending strength, are low; and surface roughness becomes rough or processability is inferior due to chipping and abrasion of a cutting edge of a cutting tool caused by falling of the reinforcing material or collision of the cutting tool with the hard reinforcing material at the time of precise shape processing, and according to the present invention, there is provided a useful metal-coated metal matrix composite capable of suppressing these problems stably. According to the present invention, it is realized to provide the above-described useful metal-coated metal matrix composite, which thereby enables realization of providing a product composed of the metal matrix composite: to which a new function that has not been obtained from a matrix material alone is added by compounding the matrix material with a reinforcing material to form a composite; in which technical problems peculiar to metal matrix composites, caused by forming the composite, are solved by a simple method; and in which the reliability is enhanced more than the conventional products.

### Brief Description of Drawings

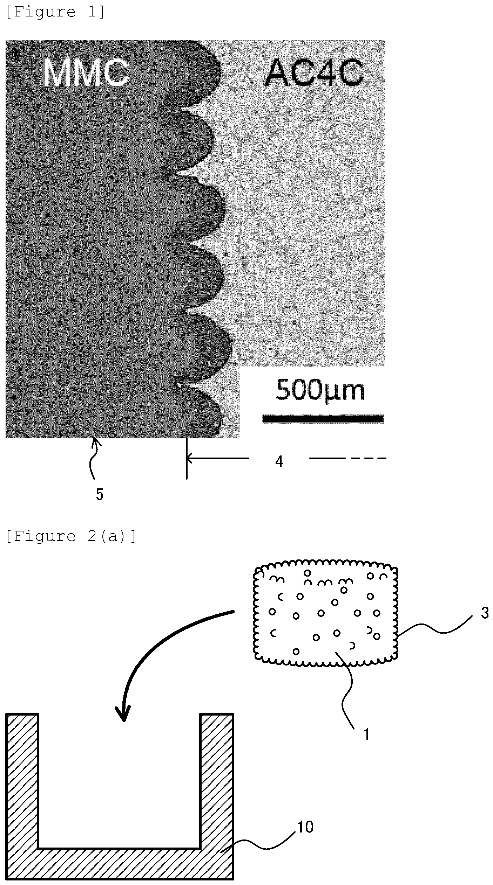

[Figure 1] Figure 1 is an electron micrograph showing a metal coating layer 4 which is formed on a surface of a MMC in which vacant pores of a porous molded body (reinforcing material) are impregnated and filled with a matrix material (AC4C) and is formed including unevenness of the porous molded body (reinforcing material), the metal coating layer 4 composed of the matrix material (AC4C), in a metal-coated metal matrix composite of Example 1.
[Figure 2(a)] Figure 2a is a schematic diagram showing the first step for describing the outline of the procedures of the method for producing a metal-coated metal matrix composite of the present invention.

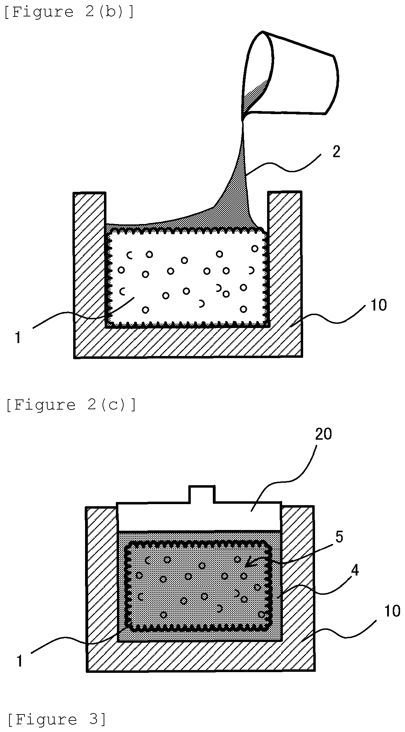

[Figure 2(b)] Figure 2(b) is a schematic diagram showing a state before pressure casting in a composite forming step which is performed after the step shown in Figure 2(a) and in which molten matrix material is used in the procedures of the method for producing a metal-coated metal matrix composite of the present invention.
[Figure 2(c)] Figure 2(c) is a schematic diagram showing a state after pressure casting which is performed subsequently after the operation shown in Figure 2(b) in the composite forming step in the procedures of the method for producing a metal-coated metal matrix composite of the present invention.

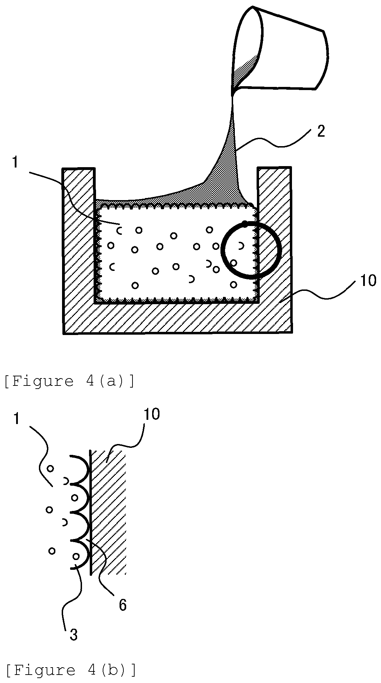

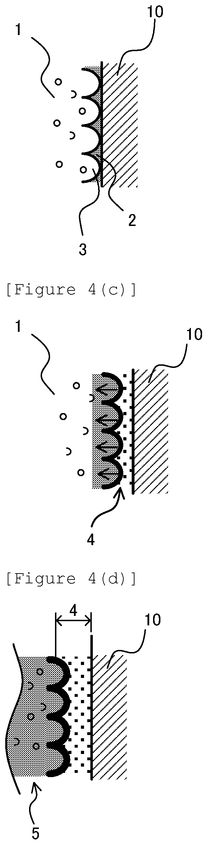

[Figure 3] Figure 3 is a schematic diagram showing a position of a porous molded body (reinforcing material) in Figure 4 for describing how a continuously integrated metal coating layer 4 that characterizes the metal-coated metal matrix composite of the present invention is formed by pressure casting, wherein the metal coating layer 4 is composed of a matrix material forming the composite.
[Figure 4(a)] Figure 4(a) is a schematic diagram showing a state of a surface of a molded body 1 when the porous molded body (reinforcing material) 1 is placed in a metal mold 10 for describing how a continuously integrated metal coating layer 4 that characterizes the metal-coated metal matrix composite of the present invention is formed on a surface of the porous molded body (reinforcing material), wherein the metal coating layer 4 is composed of a matrix material.
[Figure 4(b)] Figure 4(b) is a schematic diagram before pressure casting for describing a state where a molten matrix material 2 has flown into gaps (voids) larger than the pores (vacant pores) of the molded body, the gaps (voids) formed between the surface of the porous molded body (reinforcing material) and the inner wall of the metal mold in the state shown in Figure 4(a).
[Figure 4(c)] Figure 4(c) is a schematic diagram for describing a state where the pores (vacant pores) of the porous molded body (reinforcing material) begin to be impregnated with the molten matrix material 2 by pressure casting and the molten matrix material 2 begins to penetrate into the pores (vacant pores) of the porous molded body (reinforcing material) by pressure casting, after the molten matrix material 2 shown in Figure 4(b) flows into the gaps (voids).
[Figure 4 (d) Figure 4(d) is a schematic diagram after pressure casting for describing a state where the impregnation of the porous molded body (reinforcing material) with the molten matrix 2 shown in Figure 4(c) and the penetration of the molten matrix material 2 into the porous molded body (reinforcing material) shown in Figure 4(c) have progressed and the matrix material 2 is filled in the pores (vacant pores) to form the composite.

### Description of Embodiments

Hereinafter, the present invention will be described with reference to preferred embodiments, but the present invention is not limited to these embodiments. A metal-coated metal matrix composite of the present invention is a metal matrix composite characterized in that the metal matrix composite is formed by using, as a matrix material, a known pure metal or alloy which is used for forming a composite with a reinforcing material and using, as a reinforcing material, a material different from the matrix material and compounding the matrix material and the reinforcing material, wherein the reinforcing material is a porous molded body and particular regular unevenness is provided on the surfaces of the molded body, and thereby the metal-coated metal matrix composite has, on the surfaces thereof by the formation of the composite, a metal coating layer including the unevenness, coating the surfaces of the reinforcing material, being formed in a state of being continuously integrated with the matrix material with which the inside of the composite is impregnated and filled, and composed of the matrix material.

Particularly, the above-described continuously integrated metal coating layer (sometimes referred to as metal layer) is formed so as to have a thickness of 0.5 mm to 5 mm, preferably 0.5 to 3 mm. Specifically, when the thickness exceeds 5 mm, the metal layer on the surfaces is too thick and there is concern that the properties of the composite are lowered in some cases, and on the other hand, it is not preferable that the thickness is less than 0.5 mm because there is concern that the metal coating layer peels off and there is a higher risk that the technical problems to be solved by the present invention cannot be solved.

Further, the metal-coated metal matrix composite of the present invention is, as described above, characterized in that the reinforcing material which is to form the composite with the matrix material is a porous molded body composed of a material, such as ceramic particles and metal particles, and particular regular unevenness is provided on the surfaces of the molded body, and the above-described metal coating layer that characterizes the present invention is characterized in that the metal coating layer includes this unevenness and coats the surfaces of the reinforcing material, and is formed in a state of being continuously integrated with the matrix material with which the pores are impregnated and filled. In addition, the regular unevenness provided on the surfaces of the porous molded body composed of a desired reinforcing material has a height difference of 0.1 mm or more, wherein the height difference is a size of within a range of 50% or less of the thickness of the metal coating layer, and the shape of the unevenness is periodic. Specifically, such regular unevenness is provided on the surfaces of the porous molded body (hereinafter, sometimes referred to as reinforcing material-molded body) composed of a reinforcing material, and thereby when a composite is formed by impregnating and filling the molded body with the molten matrix material, the metal coating layer including this regular unevenness and coating the surfaces of the reinforcing material with the matrix material is formed. As a result, in the metal coating layer, the regular unevenness is provided at the interface between the reinforcing material-molded body impregnated and filled with the matrix material and matrix material that coats the surfaces of the molded body (see Figure 1).

According to studies conducted by the present inventors, the regular unevenness is provided on the surfaces of the reinforcing material-molded body, as described above, and thereby the metal matrix composite (MMC) obtained by compounding the reinforcing material-molded body and the matrix material has a metal coating layer formed on the surfaces thereof, wherein the metal coating layer is such that the matrix material coats the surfaces of the reinforcing material-molded body firmly and stably through the regular unevenness, and the metal coating layer is continuously integrated with the matrix material with which the inside of the reinforcing material-molded body is impregnated and filled. Therefore, the contact area between the matrix material and the reinforcing material at the interface is enlarged, and further, an anchor effect due to the unevenness present at the interface can be expected. Because of these facts, the metal coating layer formed on the surfaces of the metal matrix composite that forms the present invention is considered to be a strong metal coating layer in which the adhesiveness and the adhesion strength are improved.

The method for producing a metal-coated metal matrix composite of the present invention is characterized in that the method includes a composite forming step of compounding a matrix material being a pure metal or an alloy and a reinforcing material composed of a material different from the matrix material to obtain a metal matrix composite, wherein in the composite forming step, a porous reinforcing material-molded body is set in a metal mold, the pores of the porous molded body are impregnated and filled with the molten matrix material by pressure casting to compound the reinforcing material and the matrix material to form the composite, and in this composite forming step, the above-described metal coating layer that characterizes the present invention is formed simultaneously. Specifically, by using the porous reinforcing material-molded body having particular regular unevenness provided on the surfaces thereof, the continuously integrated metal coating layer including the regular unevenness and composed of the matrix material is simultaneously formed on the surfaces of the metal matrix composite obtained by impregnating and filling the reinforcing material with the matrix to form the composite with the reinforcing material.

In other words, the metal-coated metal matrix composite of the present invention has, on the outermost surfaces thereof, the continuously integrated metal coating layer formed by coating the surfaces of the reinforcing material-molded body with the matrix material, and the metal coating layer is prepared in the manner as described below in the above-described composite forming step. Specifically, in the production step wherein the pores (vacant pores) of the reinforcing material-molded body having preliminary formed regular unevenness provided on the surfaces thereof are impregnated and filled with the molten matrix material by pressure casting to compound the reinforcing material and the matrix material, and thereby a metal matrix composite is obtained, the metal coating layer is simultaneously formed through the above-described regular unevenness on the surfaces of the metal matrix composite, wherein the metal coating layer is formed in a state of being continuously integrated with the matrix material with which the inside of the metal matrix composite is impregnated and filled. As described above, the metal coating layer has a thickness of about 0.5 mm or more and about 5 mm or less. Such a metal coating layer can easily be formed by using a reinforcing material-molded body having unevenness provided on the surfaces thereof. The metal coating layer that characterizes the metal-coated metal matrix composite of the present invention and that is composed of a matrix material forming the surfaces of the metal-coated metal matrix composite of the present invention is, as described above, in a state of being continuously integrated with the matrix material with which the inside of the metal matrix composite is impregnated and filled, and therefore the performance that has never been able to be improved so far by conventional techniques can be improved. Specifically, the mechanical properties desired for the metal matrix composites, the surface accuracy/roughness and processability required during processing, and besides, surface treatability are improved, and the problem of suppressing generation of dusts during the use can also be improved.

Further, according to the present invention, due to the metal coating layer formed on the surfaces of the metal matrix composite, it is also made possible to solve the problem of peel-off of the reinforcing material and loss by falling of the reinforcing material, which has not been able to be solved by the technique of Patent literature 1 described above as one of the conventional techniques. Specifically, according to the configuration described above, in the step of producing the metal matrix composite (composite forming step) wherein the pores (vacant pores) of the reinforcing material-molded body are impregnated and filled with the matrix material, it is made possible to easily form the metal coating layer composed of the matrix material such that the inside and outside of the reinforcing material, in other words from the inside of the metal matrix composite to the metal coating layer on the surfaces of the metal matrix composite, are continuously integrated using the matrix material which is used for composite formation. As a result, it is possible to realize improving the adhesiveness and bonding strength of the metal coating layer that forms the outermost surfaces of the metal-coated metal matrix composite of the present invention and that is composed of the matrix material, which makes it possible to solve the above-described technical problems. In addition, as described above, by using the reinforcing material-molded body having a configuration of providing regular unevenness on the surfaces thereof, it is made possible to enlarge the contact area between the metal matrix composite and the metal coating layer including the unevenness formed on the surfaces of the reinforcing material-molded body and being composed of the matrix material, and by the anchor effect due to the unevenness present at the interface, it is made possible to realize improving the adhesiveness and bonding strength of the metal coating layer in a simple manner.

The paragraph [0006] in Patent Literature 1 described as one of the conventional techniques states that "In order to solve such problems, attempts to make a vessel that can be used even in a vacuum chamber using a metal matrix composite have been made. Specifically, there is described a method wherein a metal matrix composite is placed at a predetermined position in a metal mold in the atmosphere and insert casted, and the surfaces thereof are subjected to a matrix metal. However, by this method, it is impossible to subject a surface in contact with the metal mold to a matrix metal. Thus, attempts to perform insert casting placing a spacer or the like in a metal mold have been made, but an oxide is formed on the whole surface of the spacer during insert casting, and as a result, when the above-described passivation treatment is carried out, an electric potential difference occurs at an interface between the original spacer and a surface subjected to a matrix metal, so that a problem such as an abnormal corrosion phenomenon occurs during the generation of passivation film."

As it is clear from the aabove description, to produce a metal matrix composite having a configuration such that all the peripheries are coated with a metal layer composed of a matrix material, it is conceivable according to conventional techniques that it is essential to raise the metal matrix composite from a metal mold with a spacer or the like so that the metal matrix composite will not come into contact with the metal mold. The same applies when a reinforcing material-molded body is set in a metal mold, and a spacer or a baseboard structure (that is, a member for holding the reinforcing material by fitting the base board structure to the metal mold) is necessary. However, when a spacer is used, interfaces are present as described in Patent Literature 1 described above, and when a base board structure is used, the metal mold and the reinforcing material-molded body come into contact with each other by fitting, and therefore all the peripheries of a metal matrix composite cannot be covered with a metal layer using a matrix material.

Different from the above-described conventional techniques, the present invention uses the reinforcing material-molded body having arbitrary regular unevenness formed on the surfaces thereof and thereby solves the technical problem that cannot be solved by the above-described technique of Patent Literature 1. The present invention is characterized by using a reinforcing material-molded body having regular large unevenness 3, for example, dimples and grooves, formed on the surfaces thereof (see Figure 2(a)) so that the gaps (voids) 6 larger than the pores (vacant pores) inside the reinforcing material-molded body to be filled with the matrix material by composite formation can be formed on the outermost surfaces of the reinforcing material-molded body. As a result, when the reinforcing material-molded body is set in the metal mold 10 for casting or the like, protruded portions provided on the surfaces of the reinforcing material-molded body 1 come into contact with the inner surfaces of the metal mold 10, and thereby positioning accuracy can be secured, and a structure can be made such that gaps (voids) larger than the pores (vacant pores) of the inside of the reinforcing material-molded body are formed and secured between the recessed portions 3 on the surfaces of the reinforcing material-molded body 1 and the internal surfaces of the metal mold (see Figure 2(b) and Figure 4(a)). The effects described below are obtained by such a structure.

Figure 3 and Figure 4 show schematic diagrams for describing the state where the reinforcing material-molded body having particular unevenness that characterizes the present invention on the surfaces thereof is filled with the molten metal of the matrix material. Figure 3 is a schematic diagram for showing the position of enlarged diagrams shown in Figures 4 (a) to (d) . Figure 4 (a) is an enlarged schematic diagram showing the relationship between the surface of the reinforcing material-molded body 1 and the inner surface of the metal mold 10 when the reinforcing material-molded body 1 is set in the metal mold 10 in the manner as shown in Figure 2(b). In the production method of the present invention, the reinforcing material-molded body 1 can be set in the metal mold 10 with good positioning accuracy due to the presence of protrusions in the regular unevenness provided on the surfaces of the reinforcing material-molded body 1. As shown in Figure 4(a), large gaps (voids) 6 are formed between the surface of the reinforcing material-molded body 1 and the inner surface of the metal mold 10 due to the regular unevenness 3 provided on the surface of the reinforcing material-molded body 1.

Figure 4(b) is an enlarged schematic diagram showing the surface state of the reinforcing material-molded body 1 before pressure casting when filling the metal mold 10 with a molten metal 2 of the matrix material in the composite forming step by pressure casting (see Figure 2(b)) is started. As shown in Figure 4 (b), casting pressure is not applied to the molten metal while the molten metal flows, and therefore the small pores (vacant pores) inside the reinforcing material-molded body 1 cannot be impregnated with the molten metal and the molten metal cannot penetrate into small pores (vacant pores) inside the reinforcing material-molded body 1. However, large gaps (voids) 6 formed between the recessed portions in the unevenness 3 provided on the surfaces of the reinforced material molded body 1 and the inner surfaces of the metal mold 10 are easily filled with the molten metal, and therefore the large gaps (voids) 6 serve as flow channels for the molten metal, so that the matrix 2 which is the molten metal firstly coats the whole outer peripheral surfaces of the reinforcing material-molded body through the recessed portions in the surfaces of the reinforcing material-molded body 1. When impregnating and filling the large gaps (voids) 6 between the recessed portions of the reinforcing material-molded body 1 and the metal mold 10 with the molten metal are completed (see Figure 4(b)), the transfer of the molten metal becomes stagnant, and therefore the casting pressure applied to the molten metal increases and the impregnation of the small pores (vacant pores) inside the reinforcing material-molded body 1 with the molten metal of the matrix material and the penetration of the molten metal of the matrix material into the small pores (vacant pores) inside the reinforcing material-molded body 1 begin, so that composite formation is accelerated. Figure 4(c) shows this state. Note that as shown in Figure 2(c), pressurization using a pressurizing pin 20 accelerates the impregnation of the pores (vacant pores) inside the reinforcing material-molded body 1 with the molten metal 2 and the penetration of the molten metal 2 into the pores (vacant pores) inside the reinforcing material-molded body 1, and besides, contracts the reinforcing material-molded body 1 as will be described later.

Further, one of the characteristics of the method for producing a metal-coated metal matrix composite of the present invention is in that, as described below, adjusting the thickness of the metal coating layer can be controlled by pressurization conditions in terms of casting pressure. As described above, according to the production method of the present invention, the molten metal of the matrix material is poured into the metal mold by pressure casting, the molten metal first flows onto the whole outer peripheral surfaces of the reinforcing material-mold body and the molten metal of the matrix material coats the outer peripheral surfaces. Then, when filling the large gaps (voids) formed between the recessed portions of the reinforcing material-molded body and the inner surfaces of the metal mold with the molten metal is completed, the flow of the molten metal becomes stagnant, and therefore the casting pressure applied to the molten metal increases to cause the impregnation of the small pores (vacant pores) inside the reinforcing material-molded body and the penetration into the small pores (vacant pores) inside the reinforcing material-molded body. In this case, the extent of the impregnation of the small pores (vacant pores) inside the reinforcing material-molded body and the penetration into the small pores (vacant pores) inside the reinforcing material-molded body can be adjusted by the methods such as: taking more time after the molten metal is poured till the impregnation of the small pores (vacant pores) inside the reinforcing material-molded body with the molten metal and the penetration of the molten metal into the small pores (vacant pores) inside the reinforcing material-molded body are started; decreasing the pressure-increasing rate; and temporarily stopping the pressurization. Specific examples of the method include a method wherein after the large gaps (voids) formed between the recessed portions provided on the surfaces of the reinforcing material-molded body and the inner surfaces of the metal mold are filled with the molten metal to fill the whole outer peripheral surfaces of the reinforcing material-molded body, the molten metal which is used for coating the surfaces is made into a state where solidification has progressed moderately (a state where the proportion of the solid phase of the molten metal is made large). By adopting such a method, the viscosity of the molten metal is increased to enable making it difficult to impregnate the small pores (vacant pores) inside the reinforcing material-molded body with the matrix material (molten metal) and penetrate the matrix material (molten metal) into the small pores (vacant pores) inside the reinforcing material-molded body (in other words, make the resistance against the impregnation and the penetration large).

When the pressure in the pressure casting is increased after the molten metal is made into the state where the solidification of the molten metal has progressed moderately as described above, the small pores (vacant pores) inside the reinforcing material-molded body begin to be impregnated with the matrix material and the matrix material begins to penetrate into the small pores (vacant pores) inside the reinforcing material-molded body, but the resistance against the impregnation and the penetration increases, and therefore, as shown in Figure 4(c), the reinforcing material-molded body is pushed in the direction shown by the arrows simultaneously with the impregnation and the penetration to contract the reinforcing material-molded body. This makes the metal coating layer on the whole outer peripheries of the reinforcing material-molded body thick. As just described above, the thickness of the metal coating layer can be controlled by appropriately adjusting the level of solidification of the molten metal and the pressurization conditions. For example, when the extent of the progress of the solidification is small, it makes the metal coating layer thin, and on the other hand, when the extent of the progress is large, it makes the metal coating layer thick. In addition, when the pressure in the pressure casting is decreased, it makes the metal coating layer thin, and when the pressure in the pressure casting is increased, it makes the metal coating layer thick. However, when the solidification of the molten metal progresses excessively, it is made difficult to impregnate the small pores (vacant pores) inside the reinforcing material-molded body and the penetration into the small pores (vacant pores) inside the reinforcing material-molded body, and the inside of the reinforcing material is not filled with the molten metal, which causes a defect. Thus, in the present invention, the above-described range of adjusting the thickness of the metal coating layer is about 0.5 to about 5 mm. The thickness of the metal coating layer is preferably about 2 mm to about 3 mm.

As for the unevenness (roughness) on the surfaces of the reinforcing material-molded body, the difference in height between the protruded portions and the recessed portions (that is, the depth of the voids to be the gaps when the reinforcing material-molded body is set in the metal mold) is preferably 1 mm or more when the pressure is not applied, although it depends on the casting pressure. When the pressure is applied, the regular unevenness on the surfaces of the reinforcing material-molded body can be made smaller than when the pressure is not applied, but the size of the pores (vacant pores) inside the reinforcing material-molded body needs to be made larger than when the pressure is not applied. As described above, adjusting the coagulation state of the molten metal after the large gaps (voids) between the reinforcing material-molded body and the inner surfaces of the metal mold are filled with the molten metal is possible, and designing proper unevenness (roughness) according to the casting pressure to be applied on the matrix material is possible, and therefore there is no need to be particular about the above-described size.

As described above, the method for producing a metal-coated metal matrix composite of the present invention is characterized in that predetermined unevenness is formed between the reinforcing material-molded body and the inner surfaces of the metal mold. On the other hand, not to mention, it is possible to secure the similar voids by forming the unevenness on the inner surfaces of the metal mold instead of forming the unevenness on the surfaces of the reinforcing material-molded body. However, when the unevenness is formed on the inner surfaces of the metal mold, the molten metal of the matrix material is filled in the recessed portions on the inner surfaces of the metal mold to form protrusions on the metal matrix composite by transfer, and therefore the disadvantages as described below occur. When the metal matrix composite is extruded from the metal mold to release the metal matrix composite from the metal mold, the transferred protruded portions of the metal matrix composite form undercuts (the transferred protruded portions of the metal matrix composite are caught) in the extrusion direction to bring about release resistance, and therefore the release by extrusion cannot be performed, or even if the release by extrusion can be performed, the surfaces of the metal matrix composite at the parts where the metal matrix composite and the metal mold are in contact with each other are broken and lost, so that the metal coating layer that characterizes the present invention cannot be formed in a favorable state.

As the matrix material that forms the metal-coated metal matrix composite of the present invention, any of the known pure metals or alloys which have been used for forming a composite with a reinforcing material can be used. Specific examples of the matrix material include aluminum or an aluminum alloy, magnesium or a magnesium alloy, and copper or a copper alloy. Among others, the aluminum alloy is a lightweight material among practical metal materials, and demands for a technique of complementing properties which are deficient in aluminum alloys by forming a composite with a reinforcing material to improve the properties are expected to grow increasingly in the future. For example, demands for weight reduction of members are further growing mainly in transportation devices for automobiles and aircraft, and realization of improvements in reliability of members composed of metal matrix composites has been eagerly waited.

As the reinforcing material that forms the metal-coated metal matrix composite of the present invention, any of the conventionally known reinforcing materials can be utilized. Examples of the reinforcing material include ceramic particles, such as silicon carbide (SiC) particles, aluminum borate particles, and alumina (Al₂O₃) particles, and metal particles, such as Si particles and Al₃Ni particles.

### Examples

Hereinafter, the present invention will be described with reference to Examples and Comparative Examples, but the present invention is not limited to the following Examples.

### [Example 1]

A molded body to be used as a reinforcing material was produced by the following procedure, and thereafter, the obtained reinforcing material-molded body was subjected to high-pressure casting using a molten Al alloy which is a matrix material to obtain a metal-coated metal matrix composite of the present Example. Firstly, 2 kg of SiC particles having an average particle size of 44 µm were used as a reinforcing material, and to the particles, 0.1 kg of a colloidal silica solution (average particle size 50 nm, concentration 25%) was added as a binder to prepare a slurry in which the SiC particles and the colloidal silica were dispersed in 3 kg of water. Subsequently, the obtained slurry was filled in a porous mold, and the water was removed from the air vents of the porous mold by a suction filtration method to prepare a reinforcing material-premolded body. This reinforcing material-premolded body was dried and then calcined at 800°C to obtain a reinforcing material-molded body. Then, a groove having a width of 2 mm and having a depth of 1 mm was repeatedly formed on the whole surfaces of the resultant reinforcing material-molded body, and thus a reinforcing material-molded body having unevenness on the surfaces thereof, which was used in the present Example, was prepared.

The reinforcing material-molded body obtained above was preheated to 700°C and set in a casting metal mold having the same shape as the reinforcing material-molded body and preheated to 200°C (see Figure 2(a)), and immediately after that, a molten Al alloy (AC4C) melted at 800°C was poured into the metal mold (see Figure 2(b)). Then, the pressurizing pin was allowed to descend but retained in a non-pressurized state for 30 seconds; pressurization was then started to increase the pressure to 100 MPa after 1 minute; the pressure was retained at 100 MPa for 10 minutes to impregnate the pores of the reinforcing material-molded body with the molten Al alloy; and thus, a metal-coated metal matrix composite was obtained (see Figure 2(c)). The resultant metal-coated metal matrix composite had a structure in which a metal coating layer was formed on the surfaces of the reinforcing material-molded body having unevenness on the surfaces thereof, and thicknesses of the metal coating layer were measured to ascertain that the surfaces of the reinforcing material-molded body were coated with a continuous metal layer having a thickness of 0.5 mm to 1.0 mm and composed of a material composed of the Al alloy which is a matrix.

### [Example 2]

Firstly, in the present Example, 1.5 kg of aluminum borate particles having an average particle size of 44 µm were used as a reinforcing material, and to the particles, 0.2 kg of a colloidal silica solution (average particle size 5 nm, concentration 20%) was added as a binder to prepare a slurry in which the aluminum borate particles and the colloidal silica were dispersed in 2 kg of water. Then, the slurry obtained in the manner as described above was filled in a resin mold formed by lamination shaping with a 3D printer, and vibration was applied to the slurry for 20 minutes to prepare a reinforcing material-premolded body by a sedimentation method. On the inner surfaces of the resin mold used above, lattice-like regular protrusions having a depth and a width of about 0.5 mm each were provided. The reinforcing material-premolded body as prepared by a sedimentation method was frozen and then put into a heating furnace, and then the temperature was increased to 800°C from 40°C over 20 hours to evaporate water and calcine the reinforcing material-premolded body. As a result, on the whole surfaces of the reinforcing material-molded body after the calcination, there were regularly provided recesses formed by transfer from the resin mold having, on the inner surfaces thereof, lattice-like regular protrusions having a depth and a width of 0.5 mm each.

The reinforcing material-molded body obtained above was preheated to 700°C and set in a casting metal mold having the same size as the reinforcing material-molded body and preheated to 200°C, and immediately after that, a molten Al alloy (ADC12) melted at 800°C was poured into the metal mold. Then, the pressurizing pin was allowed to descend and retained in a pressurized state of 2 MPa for 50 seconds; pressurization was then started to increase the pressure to 100 MPa after 1 minute; the pressure was retained at 100 MPa for 10 minutes to impregnate the pores of the reinforcing material-molded body with the molten Al alloy; and thus, a metal-coated metal matrix composite was obtained. The resultant metal-coated metal matrix composite had a structure in which a metal coating layer is formed on the surfaces of the reinforcing material-molded body having recesses on the surfaces thereof, and thicknesses of the metal coating layer were measured to ascertain that the surfaces of the reinforcing material-molded body were coated with a continuous metal layer having a thickness of 2 mm to 3 mm and composed of the Al alloy which is a matrix.

### [Example 3]

Firstly, in the present Example, a resin model having the same shape as a reinforcing material-molded body to be a target was shaped by lamination shaping with a 3D printer. The resin model had regular protrusions for forming dimples having a height of about 0.5 mm and a diameter of about 1 mm on the surfaces thereof. Subsequently, the resin model shaped above was immersed in a silicone rubber solution for squeezing, and then silicone rubber was hardened to prepare a reinforcing material-forming mold having, on the surfaces thereof, regular dimple-shaped recesses having a depth of about 0.5 mm and a diameter of about 1 mm and made of the silicone rubber.

As a reinforcing material, 1 kg of aluminum borate particles having an average particle size of 44 µm were used, and a monomer, a crosslinking agent, and a dispersant were added in an amount of 500 g in total as raw materials for making a resin binder by polymerization, and 5 kg of water was added thereto to prepare a slurry in which the above-described raw materials were dispersed. A polymerization initiator was added to the slurry obtained above so as to start polymerization, and then the slurry was quickly filled in a silicone rubber mold, which is the reinforcing material-forming mold prepared above, to prepare a reinforcing material-premolded body. As described above, regular dimple-shaped recesses having a depth of about 0.5 mm and a diameter of about 1 mm were formed on the inner surfaces of the silicone rubber mold used.

The reinforcing material-premolded body obtained above was degreased at 600°C and then calcined at 1000°C to prepare a reinforcing material-molded body. On the whole surfaces of the reinforcing material-molded body calcined, there were provided protrusions derived from the dimples, being formed in the silicone rubber mold by transfer from the resin mold shaped by lamination shaping with a 3D printer, and having a height of 0.5 mm and a diameter of 1 mm.

This reinforcing material-molded body was preheated to 700°C and set in a casting metal mold having the same size as the reinforcing material-molded body and preheated to 200°C, and immediately after that, a molten Al alloy (ADC12) melted at 800°C was poured into the metal mold. Then, the pressurizing pin was allowed to descend and retained in a pressurized state of 1 MPa for 30 seconds; pressurization was then started to increase the pressure to 100 MPa after 1 minute; the pressure was retained at 100 MPa for 10 minutes; and thus, a metal-coated metal matrix composite was obtained. The resultant metal-coated metal matrix composite had a structure in which a metal coating layer is formed on the surfaces of the reinforcing material-molded body having protrusions on the surfaces thereof, and thicknesses of the metal coating layer were measured to ascertain that the surfaces of the reinforcing material-molded body were coated with a continuous metal layer having a thickness of 2 mm to 3 mm and composed of the Al alloy which is a matrix.

### [Comparative Example 1]

As a reinforcing material, 2 kg of SiC particles having an average particle size of 44 µm were used in the same manner as in Example 1, and to the particles, 0.1 kg of a colloidal silica solution (average particle size 50 nm, concentration 25%) was added as a binder to prepare a slurry in which the SiC particles and the colloidal silica were dispersed in 3 kg of water. Subsequently, the obtained slurry was filled in a porous mold, and the water was removed from the air vents of the porous mold by a suction filtration method to prepare a reinforcing material-premolded body. The reinforcing material-premolded body was dried and then calcined at 800°C to obtain a reinforcing material-molded body. The reinforcing material-molded body obtained above was preheated to 700°C and set in a casting metal mold having the same shape as the reinforcing material-molded body and preheated to 200°C, and immediately after that, a molten Al alloy (AC4C) melted at 800°C was poured into the metal mold to prepare a metal matrix composite in the manner as described below. The surface texture of the reinforcing material-molded body which was used above and obtained by the calcination at 800°C was checked to ascertain that the unevenness on the whole surfaces was less than 0.1 mm or less and the unevenness was not regularly formed.

As described above, the metal matrix composite was prepared in such a way that the molten Al alloy (AC4C) melted at 800°C was poured into the metal mold; the pressurizing pin was allowed to descend but retained in a non-pressurized state for 30 seconds; pressurization was then started to increase the pressure to 100 MPa after 1 minute; and the pressure was retained at 100 MPa for 10 minutes. The method (condition) for obtaining the metal matrix composite using the reinforcing material-molded body is the same as in Example 1.

The surface texture of the metal matrix composite of the present Comparative Example, obtained above, was observed to compare the surface texture with that of the metal-coated metal matrix composites of Examples. As a result, it was ascertained that as for the metal matrix composite of the present Comparative Example, the surfaces of the reinforcing material-molded body brought into contact with the casting metal mold were not impregnated with the matrix metal and the matrix metal did not penetrate into the surfaces of the reinforcing material-molded body brought into contact with the casting metal mold, and there existed a lot of defective parts where the reinforcing material-molded body was not impregnated with the matrix metal. In addition, as for the metal matrix composite of the present Comparative Examples, the metal coating layer was not hardly formed.

### <Evaluations>

The following evaluations were performed respectively for each of the above-obtained metal matrix composites of Examples and Comparative Examples.

### (Evaluations of Thickness and Regularity of Metal Coating Layer)

Each metal matrix composite was cut to measure the thickness of the metal coating layer forming the surfaces of the composite, and the results are shown in Table 1. In addition, the interface between the metal coating layer and the reinforcing material-molded body was observed using the cut sample to evaluate whether or not the regularity of the unevenness provided on the surfaces of the reinforcing material-molded body were retained. When the regularity was retained, the regularity was evaluated as "Good," and when the unevenness with the regularity was not observed, the regularity was evaluated as "Poor."

### (Closeness of Metal Coating Layer)

Figure 1 shows a micrograph of a boundary surface between the reinforcing material-molded body and the metal coating layer in the metal-coated metal matrix composite of Example 1. As shown in Figure 1, the metal coating layer had a thickness of about several mm at the thickest but was formed closely on the surface of the reinforcing material-molded body on which the unevenness was provided. That the metal coating layer was formed closely was ascertained by the test for evaluation on bending, described below. Specifically, when the metal coating layer was formed closely on the surfaces of the reinforcing material-molded body, the metal coating layer exhibited a strong bending strength and the metal coating layer was never fractured.

### [Bending Strength Test]

From each of the metal-coated metal matrix composites obtained above, a sample for measurement having a size of 15 mm in thickness, 20 mm in width, and 50 mm in length and including the metal coating layer as the outermost surface was cut out. Then, the bending strength of this sample for measurement was measured in accordance with the tree-point bending test in JIS Z 2248:2006. The results obtained are shown together in Table 1.

### (Performance of Impregnation and Filling of Parts of Reinforcing Material-Molded Body Set in Metal Mold)

The cut surfaces of each of the metal matrix composite used for the measurement of the thickness of the metal coating layer were visually observed to check whether or not the reinforcing material-molded body was well impregnated and filled to the inside thereof with the molten aluminum alloy, which is a matrix material. On that occasion, filling states of the parts of the reinforcing material-molded body set in the casting mold were checked in particular. The results are shown in Table 1.

### (Surface Roughness after Processing)

As for the surface state of each of the metal matrix composites obtained above, the roughness (Rz) was measured in accordance with JIS B 0601:2001 using a surface roughness meter to evaluate the surface states. The results obtained are shown in Table 1. As shown in Table 1, all of the metal-coated metal matrix composites of Examples had a surface roughness (Rz) of 3 to 6, but in contrast, the metal matrix composite of Comparative Example 1 had a surface roughness (Rz) of 10 to 12, and it was ascertained that the surfaces of the metal matrix composite of Comparative Example 1 was clearly rougher than those of the metal-coated metal matrix composites of the Examples. This means that a metal coating layer that is in a good state where the particles of the reinforcing material are not exposed on the surfaces of a metal matrix composite and that is composed of a matrix material can be formed.

**Table1: Reinforcing material-molded bodies and matrices used in Examples and Comparative Example**

| | | Example 1 | Example 2 | Example 3 | Comparative Example 1 |
|---|---|---|---|---|---|
| Reinforcing material | | 44 µm SiC | 44 µm Aluminum borate | 44 µm Aluminum borate | 44 µm SiC |
| Surface state of reinforcing material-molded body | | Unevenness having a width of 2 mm and a depth of 1mm | Lattice-like unevenness having a width and a height of 0.5 mm each | Protrusions derived from dimple having a height of 0.5 mm and a diameter of 1 mm | Unevenness of 0.1 mm or less No regularity |
| Unevenness forming method | | Cutting | Resin mold formed with 3D printer | 3D printer → Resin mold → Transfer | Not formed |
| Molten Al alloy | | AC4C | ADC12 | ADC12 | AC4C |

| Evaluations of metal-coated metal complex composite | | | | | |
|---|---|---|---|---|---|
| Metal coating layer | Regularity of unevenness | Good | Good | Good | Poor |
| | Thickness (mm) | 0.5 to 1 | 2 to 3 | 2 to 3 | 0 to0.4 |
| Impregnation and filling of parts of reinforcing material-molded body set in metal mold | | Good | Good | Good | Unfilled part present |
| Surface roughness (Rz) after processing | | Good (3 to 6) | Good (3 to 6) | Good (3 to 6) | Rough (10 to 12) |
| Evaluations on bending | Strength (MPa) | 400 | 430 | 450 | 350 |
| | Fracture | Not fractured | Not fractured | Not fractured | Fractured |

### Industrial Applicability

As exploitation examples of the present invention, the following can be expected. Demands for weight reduction of members are further growing mainly in transportation devices, for example, the aluminum alloy is a lightweight material among practical metal materials, and demands for the technique of the present invention that realizes complementing properties which are deficient in aluminum alloys by forming a composite with a reinforcing material to improve the properties are expected to grow increasingly in the future and exploitation of the technique is expected. In conventional production techniques for providing a molded body (product) composed of an aluminum matrix composite, ceramic preforms having a simple shape are used as reinforcing materials, so that subsequent processing necessary in making a product brings about an increasing in costs or deterioration in workability, and therefore the technique of the present invention is also effective in this point. Specifically, according to the technique of the present invention, the use of ceramic preforms whose shape is close to a target (product) shape makes it possible to obtain a product having an intended shape (molded body) by processing only the aluminum coating layer part that coats the surfaces of a reinforcing material-molded body, and therefore conventional problems of precision and processing time in performing precision processing can be solved and it is expected to be able to meet the needs such as automation of final finishing. In addition, according to the technique of the present invention, it is also expected to reduce costs for producing a product and to be able to accelerate applications to moving parts to which it has been difficult to apply the conventional techniques. Further, it is also expected that the technique of the present invention can be spread out into applications to jigs and the like in production apparatuses in which heat resistance and thermal deformation at high temperatures are concerned. Furthermore, each of materials and molded bodies prepared by the technique of the present invention is such that a coating layer provided on the surfaces thereof is a single metal material of a pure metal or an alloy which is a matrix material, such as aluminum, and therefore it is possible to perform conventional surface treatment (such as anodic oxidation), which has been performed on aluminum alloys and the like, so that it can be expected to impart functionality, such as a conventionally known method of making a surface porous and an improvement in hardness, and therefore utilization in a variety of fields are expected.

### Reference Signs List

- 1: Reinforcing Material-molded body
- 2: Matrix material
- 3: Regular unevenness
- 4: Metal coating layer
- 5: Metal matrix composite
- 6: Gap (void)
- 10: Metal mold
- 20: Pressurizing pin

## Claims

1. A metal-coated metal matrix composite that is a metal matrix composite being a pressure-cast product, formed: using, as a matrix material, a pure metal or an alloy, including aluminum or an aluminum alloy, magnesium or a magnesium alloy, or copper or a copper alloy; using, as a reinforcing material, a material comprising ceramic particles or metal particles different from the matrix material; and compounding the matrix material and the reinforcing material, wherein
the reinforcing material is a porous molded body and regular unevenness is provided on the surfaces of the molded body, and thereby the metal-coated metal matrix composite has, on the surfaces thereof, a continuously integrated metal coating layer comprising the unevenness and composed of the matrix material forming the composite; and
the metal coating layer has a thickness of 0.5 mm to 5 mm, and the unevenness has a height difference of 0.1 mm or more and the height difference is within a range of 50% or less of the thickness of the metal coating layer, and the shape of the unevenness is periodic.

2. The metal-coated metal matrix composite according to claim 1, wherein the metal coating layer has a thickness of 2 mm to 3 mm.

3. The metal-coated metal matrix composite according to claim 1 or 2, wherein the matrix material is at least any of aluminum, an aluminum alloy, magnesium, a magnesium alloy, copper, and a copper alloy.

4. The metal-coated metal matrix composite according to any one of claims 1 to 3, wherein the ceramic particles are at least any of silicon carbide particles, aluminum borate particles, and alumina particles, and the metal particles are at least Si particles or Al₃Ni particles.

5. A method for producing a metal-coated metal matrix composite, the method being a method for obtaining a metal-coated metal matrix composite being a pressure-cast product by compounding a matrix material that is a pure metal or an alloy, including aluminum or an aluminum alloy, magnesium or a magnesium alloy, or copper or a copper alloy, and a reinforcing material being a material different from the matrix material and comprising ceramic particles or metal particles, wherein
the method comprises a composite forming step of setting the reinforcing material being a porous molded body in a metal mold, impregnating and filling the pores of the porous molded body with the molten matrix material by a pressure casting method to compound the reinforcing material and the matrix material to obtain a metal matrix composite;
in the composite forming step, a porous molded body having regular unevenness provided on the surfaces thereof is used as the porous molded body, and thereby a continuously integrated metal coating layer comprising the unevenness, composed of the matrix material, and having a thickness of 0.5 mm to 5 mm is simultaneously formed on the surfaces of the metal matrix composite obtained by impregnating and filling the pores with the matrix material by the pressure casting method; and
the unevenness has a height difference of 0.1 mm or more and the height difference is within a range of 50% or less of the thickness of the metal coating layer, and the shape of the unevenness is periodic.

6. The method for producing a metal-coated metal matrix composite according to claim 5, wherein the metal coating layer has a thickness of 2 mm to 3 mm.

7. The method for producing a metal-coated metal matrix composite according to claim 5 or 6, wherein the matrix material is at least any of aluminum, an aluminum alloy, magnesium, a magnesium alloy, copper, and a copper alloy.

8. The method for producing a metal-coated metal matrix composite according to any one of claims 5 to 7, wherein the ceramic particles are at least any of silicon carbide particles, aluminum borate particles, and alumina particles, and the metal particles are Si particles or Al₃Ni particles.

9. The method for producing a metal-coated metal matrix composite according to any one of claims 5 to 8, wherein the pressure casting method is any one selected from the group consisting of a high-pressure casting method, a squeeze casting method, and die casting.

10. The method for producing a metal-coated metal matrix composite according to any one of claims 5 to 8, wherein the pressure casting method is a high-pressure casting method.
